# FASCICULE DE BREVET EUROPEEN

(11) **EP 0 388 292 B1**
(45) Date de publication et mention de la délivrance du brevet: **23.06.1993**
(21) Numéro de dépôt: 90400677.2
(22) Date de dépôt: 14.03.1990
(51) Int. Cl.: F16B 5/02, B60K 37/00

(54) **Dispositif de fixation de deux pièces l'une à l'autre, par exemple d'une façade de planche de bord sur une planche de bord**
Vorrichtung zur Befestigung zweier Gegenstände miteinander, z.B. eine Auskleidung eines Armaturenbrettes mit dem Armaturenbrett
Device to fix two items to each other, for example a dash board cover to the dash board

(30) Priorité: 14.03.1989 FR 8903633
(43) Date de publication de la demande: 19.09.1990
(73) Titulaire: AUTOMOBILES PEUGEOT, 75116 Paris (FR); AUTOMOBILES CITROEN, 92200 Neuilly-sur-Seine (FR)
(72) Inventeur: Thevenin-Gaillard, François, F-28260 Anet (FR)
(74) Mandataire: Boivin, Claude

(56) Documents cités:
- GB-A- 870 921
- US-A- 4 560 186

## Description

Certains éléments d'une planche de bord d'un véhicule automobile, tels que par exemple des cadrans, sont montés sur une façade qui est ensuite fixée sur la planche de bord, un peu à la manière d'un couvercle sur une boîte. Il en résulte entre la planche de bord et la façade un espace qu'on souhaite constant pour des raisons d'esthétique. Mais pour que cet espace soit constant, il faudrait que la façade soit serrée sur la planche de bord dans le sens de sa mise en place. Or, pour que les fixations soient peu visibles, elles sont disposées perpendiculairement au sens de la mise en place et n'assurent donc pas jusqu'à présent un plaquage correct.

La présente invention a pour objet un ensemble comprenant deux pièces destinées à être fixées l'une sur l'autre, par exemple une façade de planche de bord d'un véhicule automobile et la planche de bord dans lequel les deux pièces sont au contraire correctement plaquées l'une sur l'autre.

L'invention se rapporte à un ensemble tel que défini dans la revendication 1.

Cet ensemble est en particulier caractérisé en ce que la mise en place se fait suivant une direction tangente aux surfaces de contact, que les surfaces sont inclinées par rapport aux surfaces de contact et que leur inclinaison est telle que le doigt exerce sur la première pièce un effort dirigé dans le sens de la mise en place lorsqu'on l'applique sur les surfaces.

On a décrit ci-après, à titre d'exemple non limitatif, un mode de réalisation de l'ensemble selon l'invention, avec référence au dessin annexé dans lequel :

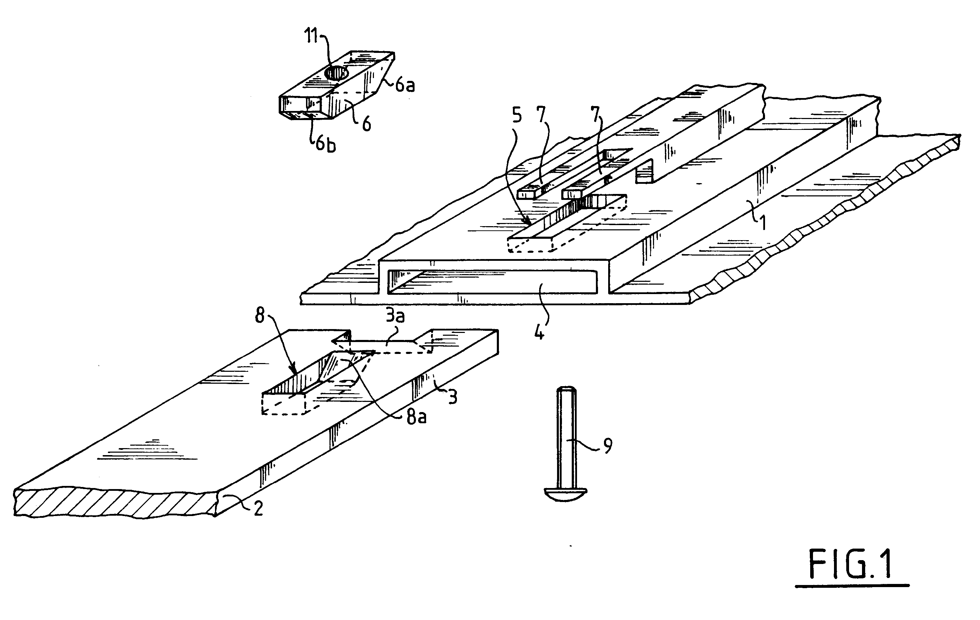

La Figure 1 est une vue en perspective montrant deux pièces à fixer et leurs moyens de fixation, les divers éléments étant séparés les uns des autres;
La Figure 2 est une vue en coupe montrant les deux pièces fixées l'une à l'autre.

Au dessin, on voit une planche de bord 1 sur laquelle une façade 2 doit être fixée en étant serrée sur la planche de bord dans le sens de la flèche F1.

La façade 2 comporte un certain nombre de pattes 3 pouvant chacune s'introduire dans un espace 4 de la planche de bord 1. Celle-ci présente au droit de l'espace 4 une ouverture 5 dans laquelle peut être introduit un doigt 6 ayant, sur une certaine partie de sa hauteur, la même forme et les mêmes dimensions que l'ouverture 5; le doigt 6 ne peut ainsi se déplacer, par rapport à la planche de bord 1, que dans une direction F2 perpendiculaire au plan de l'ouverture 5. A l'extérieur de l'ouverture 5, et vis-à-vis de celle-ci, la planche de bord 1 présente deux nervures de maintien 7. Ces nervures sont écartées de la face extérieure de l'ouverture 5 d'une distance un peu inférieure à l'épaisseur du doigt 6; elles permettent ainsi, en fléchissant légèrement, la mise en place du doigt 6 dans l'ouverture 5 mais l'empêchent ensuite de ressortir.

De son côté la patte 3 présente une ouverture 8 disposée de manière que le doigt 6 puisse s'y introduire lorsque la patte 3 est enfilée dans l'espace 4. La face 8a de cette ouverture, qui est située du côté de l'extrémité de la patte, est inclinée de l'extérieur de la patte vers l'intérieur. La face arrière du doigt 6 présente sur son bord extérieur un pan coupé 6a de même inclinaison que la face 8a. La partie centrale de l'extrémité de la patte 3 est taillée en biseau comme indiqué en 3a, son orientation étant contraire à celle de la face 8a, et la face avant du doigt 6 présente sur son bord extérieur biseauté 6b la même orientation que le biseau 3a.

Pour assurer la fixation de la patte 3 à la planche de bord 1, il est prévu une vis 9 qui peut traverser un trou 10 de la face extérieure de l'espace 4 et s'engager dans un trou taraudé 11 du doigt 6.

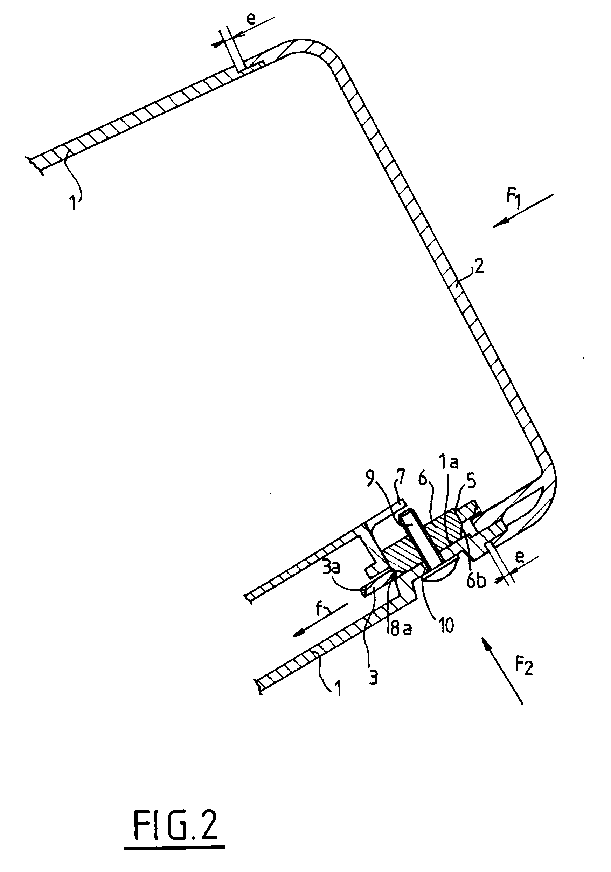

Pour fixer la patte 3 de la façade 2 au panneau 1, on glisse la patte 3 dans l'espace 4, après avoir mis en place le doigt 6 dans l'ouverture 5. Lors de ce mouvement, la face 6b du doigt rencontre le biseau 3a de la patte 3; il est ainsi surélevé, glisse sur la partie avant de la patte et tombe dans l'ouverture 8. Il ne reste plus qu'à mettre en place la vis 9 et à la serrer. Le doigt 6 est serré contre la surface 1a de la pièce 1, mais du fait de la coopération des faces 6a et 8a, la patte 3 est forcée dans l'espace 4, comme schématisé par la flèche f (Figure 2) et, lorsque le serrage est effectué, la façade 2 est plaquée contre la planche de bord 1.

Comme on l'a indiqué précédemment, la façade 2 comporte généralement plusieurs pattes 8 et chacune est fixée comme il vient d'être indiqué; la façade 2 est ainsi plaquée par toute sa périphérie contre toute la planche de bord 1, de sorte que le jeu e entre les éléments est constant.

Le dispositif de fixation qui vient d'être décrit peut être utilisé pour plaquer l'une contre l'autre des pièces autres qu'une planche de bord et une façade .

## Revendications

1. Ensemble comprenant une première pièce (2) et une deuxième pièce (1) destinées à être fixées l'une sur l'autre,
caractérisé en ce que la première pièce (2) comprend un élément (3) présentant une surface apte à être mise en contact avec une surface (1a) de la deuxième pièce (1), cet élément (3) étant percé d'une ouverture (8) qui se trouve au droit de ladite surface (1a) lorsque la première pièce (2) est en place sur la deuxième pièce (1), la mise en place se faisant suivant une direction tangente aux surfaces de contact, et en ce qu'il comporte en outre un doigt (6) apte à passer à travers ladite ouverture (8) ainsi que des moyens (9) pour appliquer ce doigt (6) sur ladite surface (1a) en le faisant passer à travers ladite ouverture (8), le doigt (6) présentant une surface (6a) apte à venir en contact avec une surface correspondante (8a) constituant l'une des parois de ladite ouverture (8), lesdits moyens d'application (9) appliquant simultanément le doigt (6) sur la surface (1a) de la deuxième pièce (1) et sur la surface (8a) de l'ouverture (8), lesdites surfaces (6a) du doigt (6) et (8a) de l'ouverture (8) étant inclinées par rapport aux surfaces de contact de l'élément (3) et de la deuxième pièce (1), ces deux surfaces (6a et 8a) ayant même inclinaison et étant orientées de sorte que le doigt (6) exerce sur la première pièce (2) un effort orienté dans le sens de la mise en place lorsque le doigt (6) est appliqué sur lesdites surfaces (1a) de la deuxième pièce (1) et (8a) de l'ouverture (8).

2. Ensemble selon la revendication 1,
caractérisé en ce que l'élément (3) est une patte de fixation.

3. Ensemble selon la revendication 2,
caractérisé en ce que la patte (3) présente un bord d'extrémité biseauté (3a) propre à coopérer avec une surface de même inclinaison (6b) du doigt (6) pour soulever ce doigt préalablement placé sur ladite surface (1a) de la seconde pièce (1) lors de la mise en place de la pièce (2).

4. Ensemble selon l'une quelconque des revendications précédentes,
caractérisé en ce qu'il comporte des moyens pour maintenir le doigt (6) sur la surface (1a) de la pièce (1) avant mise en place de la pièce (2).

5. Ensemble selon la revendication 4,
caractérisé en ce que ces moyens de maintien comprennent une ouverture (5) qui est ménagée dans une seconde partie de la pièce (1) située en vis-à-vis de ladite surface (1a) et dont les dimensions correspondent à celles du doigt (6).

6. Ensemble selon l'une quelconque des revendications précédentes,
caractérisé en ce que les moyens de maintien comprennent au moins une nervure (7) solidaire de la seconde pièce (1) et située en vis-à-vis de ladite surface (1a).

7. Ensemble selon l'une quelconque des revendications précédentes,
caractérisé en ce que les moyens pour appliquer le doigt (6) sur ladite surface (1a) de la pièce (1) comprennent une vis (9) passant à travers une ouverture (10) de la pièce (1) et engagée dans un trou taraudé (11) du doigt (6).

## Patentansprüche

1. Baueinheit mit einem ersten Bauteil (2) und einem zweiten Bauteil (1), die dazu bestimmt sind aneinander befestigt zu werden, dadurch gekennzeichnet, daß das erste Bauteil (2) ein Element (3) aufweist, welches eine Oberfläche besitzt, die geeignet ist, mit einer Oberfläche (1a) des zweiten Bauteils (1) in Kontakt gebracht zu werden, und dieses Element (3) von einer Öffnung (8) durchsetzt ist, die senkrecht zu der besagten Oberfläche (1a) angeordnet ist, wenn das erste Bauteil (2) auf dem zweiten Bauteil (1) plaziert ist, wobei das Plazieren in einer sich tangential zu den Kontaktoberflächen erstreckenden Richtung stattfindet, und daß sie außerdem einen Finger (6) aufweist, der zum Hindurchtreten durch die besagte Öffnung (8) geeignet ist, ebenso wie Mittel (9) zum Befestigen dieses Fingers (6) an der besagten Oberfläche (1a), indem man sie durch die besagte Öffnung (8) hindurchtreten läßt, wobei der Finger (6) eine Oberfläche (6a) aufweist die geeignet ist, mit einer entsprechenden Oberfläche (8a) in Kontakt zu geraten, welche eine der Wände der besagten Öffnung (8) bildet, und die besagten Befestigungsmittel (9) gleichzeitig den Finger (6) an der Oberfläche (1a) des zweiten Bauteils (1) und an der Oberfläche (8a) der Öffnung (8) befestigen und die besagten Oberflächen (6a) des Fingers (6) und (8a) der Öffnung (8) in Bezug auf die Kontaktoberflächen des Elementes (3) und des zweiten Bauteils (1) geneigt sind, wobei diese beiden Oberflächen (6a und 8a) die gleiche Neigung aufweisen und derart orientiert sind, daß der Finger (6), wenn er an den besagten Oberflächen (1a) des zweiten Bauteils (1) und (8a) der Öffnung (8) befestigt ist, auf das erste Bauteil (2) einen in Richtung seiner Plazierung orientierten Druck ausübt.

2. Baueinheit nach Anspruch 1 dadurch gekennzeichnet, daß das Element (3) eine Befestigungslasche ist.

3. Baueinheit nach Anspruch 2 dadurch gekennzeichnet, daß die Lasche (3) einen abgeschrägten äußeren Rand (3a) aufweist, der geeignet ist mit einer Oberfläche (6b) des Fingers (6), die die gleiche Neigung besitzt, zusammenzuwirken, um diesen Finger, der vorher auf der besagten Oberfläche (1a) des zweiten Bauteils (1) angeordnet ist, während der Plazierung des Bauteils(2) anzuheben.

4. Baueinheit nach einem der vorhergehenden Ansprüche dadurch gekennzeichnet daß sie Mittel zum Festhalten des Fingers (6) auf der Oberfläche (1a) des Bauteils (1) vor dem Plazieren des Bauteils (2) aufweist.

5. Baueinheit nach Anspruch 4 dadurch gekennzeichnet, daß diese Festhaltemittel eine Öffnung (5) aufweisen, die in einem zweiten, gegenüber der besagten Oberfläche (1a) gelegenen Teil des Bauteils (1) vorgesehen ist und deren Abmessungen denjenigen des Fingers (6) entsprechen.

6. Baueinheit nach einem der vorhergehenden Ansprüche dadurch gekennzeichnet, daß die Festhaltemittel mindestens eine Rippe (7) aufweisen, die mit dem zweiten Bauteil (1) fest verbunden und gegenüber der besagten Oberfläche (1a) angeordnet ist.

7. Baueinheit nach einem der vorhergehenden Ansprüche dadurch gekennzeichnet, daß die Mittel zum Befestigen des Fingers (6) an der besagten Oberfläche (1a) des Bauteils (1) eine Schraube (9) aufweisen, welche durch eine Öffnung (10) des Bauteils (1) hindurchtritt und in ein Gewindeloch (11) des Fingers (6) eingeschraubt ist.

## Claims

1. Device including one first item (2) and one second item (1) with one being intended to be fixed to the other,
wherein the first item (2) includes an element (3) having a surface suitable for being placed in contact with a surface (1a) of the second item (1), this element (3) being pierced with an opening (8) located at the right of said surface (1a) when the first item (2) is in place on the second item (1), placing being effected along a direction tangential to the contact surfaces, and wherein it further comprises a finger (6) able to pass through said opening (8), as well as means (9) to apply this finger (6) to said surface (1a) by making it pass through said opening (8), the finger (6) having a surface (6a) able to come into contact with a corresponding surface (8a) constituting one of the walls of said opening (8), said application means (9) simultaneously applying the finger (6) to the surface (1a) of the second item (1) and to the surface (8a) of the opening (8), said surfaces (6a) of the finger (6) and (8a) of the opening (8) being slanted with respect to the contact surfaces of the element (3) and the second item (1), these two surfaces (6a and 8a) having the same orientation and being orientated so that the finger (6) exerts on the first item (2) a force orientated in the placing direction when the finger (6) is applied to said surfaces (1a) of the second item (1) and (8a) of the opening (8).

2. Device according to claim 1,
wherein the element (3) is a fixing bracket.

3. Device according to claim 2,
wherein the bracket (3) has one extremity bevel-cut edge (3a) able to cooperate with a surface of the same inclination (6b) of the finger (6) so as to lift up this finger previously placed on said surface (1a) of the second item (1) at the time the item (2) is placed.

4. Device according to any one of the preceding claims, wherein it comprises means to keep the finger (6) on the surface (1a) of the item (1) prior to placing of the item (2).

5. Device according to claim 4,
wherein these holding means include an opening (5) which is provided is a second portion of the item situated opposite said surface (1a) and whose dimensions correspond to those of the finger (6).

6. Device according to any one of the preceding claims, wherein the holding means include at least one rib (7) integral with the second item (1) and situated opposite said surface (1a).

7. Device according to any one of the preceding claims, wherein the means to apply the finger (6) to said surface (1a) of the item (1) include a screw (9) passing through an opening (10) of the item (1) and engaged in a tapped hole (11) of the finger (6).
